# DEMANDE DE BREVET EUROPEEN

(11) **EP 1 843 282 A1**
(43) Date de publication de la demande: **10.10.2007**
(21) Numéro de dépôt: 07300902.9
(22) Date de dépôt: 28.03.2007
(51) Int. Cl.: G06K 19/077, G04G 1/06

(54) **Procédé pour fixer sur un produit un circuit permettant l'authentification de ce produit et produit obtenu par la mise en oeuvre de ce procédé**

(30) Priorité: 04.04.2006 FR 0651197
(71) Demandeur: Microcomposants de Haute Securité MHS, 44300 Nantes (FR)
(72) Inventeur: GADOT, Gérard, 44119, TREILLIERES (FR); TAUZINAT, Pierre, 75016, PARIS (FR)
(74) Mandataire: Grynwald, Albert

(57) **Abrégé**

L'invention concerne un objet (100) de luxe comportant une plaque (1) avec une face interne (3). Cette face interne (3) n'est pas visible de l'extérieur de l'objet lorsque la plaque (1) est assemblée avec les autres pièces de l'objet. Cet objet comporte en outre un circuit (17, 19) de type RFID capable, via liaison radio, de recevoir un signal de requête (29) émis par un lecteur (23) de circuit RFID et d'émettre un identifiant (ID) authentifiant l'objet en réponse à ce signal de requête (29) à destination du lecteur (23). Dans l'invention, le contrôleur (19) et l'antenne (17) du circuit RFID sont fixés sur la face interne (3) de la plaque. Et l'antenne (17) est réalisée par un dépôt en couche mince d'un matériau conducteur sur cette face interne.

## Description

La présente invention concerne un procédé pour fixer sur un produit un circuit permettant l'authentification de ce produit. L'invention trouve une application particulièrement avantageuse dans le domaine de l'authentification des montres de luxe, mais elle pourrait aussi être utilisée pour l'identification d'autres produits de luxe, tels que les stylos, les briquets ou les sacs à main.

De manière générale, les produits de luxes sont identifiés par leur numéro de série. Toutefois, une telle identification ne suffit pas toujours car les contrefacteurs actuels sont capables de reproduire le produit, ainsi que le symbole de la marque et le numéro de série du produit de manière tellement précise qu'il est très difficile de faire la différence entre le produit contrefait et le produit de luxe original.

On connaît des circuits de type RFID (Radio Frequency Identification en anglais) qui permettent l'identification de produit à distance. A cette fin, les circuits RFID comportent un contrôleur à mémoire à l'intérieur duquel un identifiant est stocké et une antenne reliée à ce contrôleur. Les circuits RFID sont généralement alimentés par le champ magnétique créé par un lecteur et capté par l'antenne de la puce. Une fois alimenté, le circuit reçoit et répond aux requêtes radio émises depuis le lecteur. Le circuit RFID peut ainsi transmettre son numéro d'identifiant au lecteur via une liaison radio.

Les circuits RFID sont notamment utilisés dans les domaines de l'identification des animaux domestiques (chiens, chats) ou de la ferme (vaches, cochons), la localisation de bagages dans les aéroports, ainsi que dans le domaine de la grande distribution pour le marquage des prix.

Toutefois, aucun procédé connu ne propose d'intégrer un tel circuit de manière discrète à l'intérieur de produits de luxe, tels que les montres, afin d'authentifier ces produits. Ceci est dû notamment aux formes particulières de ces produits qui rendent difficile un positionnement discret du circuit, en particulier de son antenne, à l'intérieur de ces produits.

L'invention a pour but de résoudre ce problème d'intégration du circuit RFID à l'intérieur d'un produit de luxe.

A cette fin, dans l'invention, on fixe le circuit RFID sur une plaque de ce produit comportant une face interne non visible de l'extérieur du produit. En outre, le dépôt de l'antenne du circuit RFID est réalisé par couche mince sur cette face interne.

Dans une mise en oeuvre, on réalise l'antenne du circuit RFID par pulvérisation plasma. On peut à cet effet pulvériser une poudre de métal conducteur, tel que de l'aluminium, sur la face interne du produit.

La pulvérisation plasma permet de réaliser l'antenne sur des faces de produit de toute forme, en particulier des faces bombées. En outre, un tel procédé permet de réaliser des antennes de dimensions suffisamment importantes pour que la lecture du circuit par le lecteur soit rendue possible à une distance de plusieurs centimètres.

Dans une mise en oeuvre, pour éviter qu'une plaque en métal ne perturbe les signaux magnétiques envoyés ou reçus par le circuit RFID, il est possible de positionner une couche d'isolant entre l'antenne et la plaque.

Dans une mise en oeuvre, le contrôleur du circuit RFID est fixé sur la face interne par collage, et est relié à l'antenne dans un coin de la plaque. Le circuit RFID peut également être recouvert d'une fine couche de résine pour sa protection.

L'invention concerne donc un objet comportant une plaque avec une face interne, cette face interne n'étant pas visible de l'extérieur de l'objet lorsque la plaque est assemblée avec les autres pièces de l'objet,
- cet objet comportant un circuit de type RFID capable, via une liaison radio, de recevoir un signal de requête émis par un lecteur de circuit RFID et d'émettre un identifiant authentifiant l'objet en réponse à ce signal de requête à destination du lecteur,
- ce circuit RFID comportant un contrôleur et une antenne reliée à ce contrôleur, le contrôleur étant apte à traiter le signal de requête émis par le lecteur et à émettre via l'antenne l'identifiant de l'objet à destination du lecteur,
- ce contrôleur et cette antenne étant fixés sur la face interne de la plaque,
- l'antenne étant réalisée par un dépôt en couche mince sur la face interne de la plaque.

L'invention concerne en outre un procédé pour fixer un circuit de type RFID sur un objet comportant une plaque avec une face interne, cette face interne n'étant pas visible de l'extérieur de l'objet lorsque la plaque est assemblée avec les autres pièces de l'objet,
- le circuit de type RFID étant capable, via liaison radio, de recevoir un signal de requête émis par un lecteur de circuit RFID et d'émettre à destination de ce lecteur un identifiant authentifiant l'objet en réponse à ce signal de requête,
- le circuit de type RFID comportant un contrôleur et une antenne reliée à ce contrôleur, le contrôleur étant apte à traiter le signal de requête émis par le lecteur et à émettre via l'antenne l'identifiant de l'objet à destination du lecteur,
ce procédé comportant les étapes suivantes :
- réaliser l'antenne sur la face interne de la plaque par un dépôt en couche mince, et
- fixer l'antenne et le contrôleur sur la face interne de la plaque.

L'invention sera mieux comprise à la lecture de la description qui suit et à l'examen des figures qui l'accompagnent. Ces figures ne sont données qu'à titre illustratif mais nullement limitatif de l'invention. Ces figures montrent :
- figure 1 : une représentation schématique d'une montre comportant un cadran sur lequel est mis en oeuvre le procédé selon l'invention ;
- figure 2 : une vue de face du cadran sur lequel est mis en oeuvre le procédé selon l'invention ;
- figure 3 : une représentation schématique d'une étape du procédé selon l'invention dans laquelle on accroche une couche d'isolant au dos du cadran ;
- figure 4 : une représentation schématique d'une étape du procédé selon l'invention dans laquelle on plaque, contre la couche isolante, un masque comportant une ouverture en spirale ;
- figure 5 : une représentation schématique d'une étape du procédé selon l'invention dans laquelle on pulvérise une couche de métal sur l'espace du cadran délimité par le masque pour former l'antenne du circuit RFID ;
- figure 6 : une représentation schématique d'une étape du procédé selon l'invention dans laquelle on retire le masque de projection et on relie l'antenne obtenue à un contrôleur du circuit RFID ;
- figure 7 : une représentation schématique d'un échange de données entre le cadran de la montre selon l'invention et un lecteur de circuit RFID.

Les éléments identiques conservent la même référence d'une figure à l'autre.

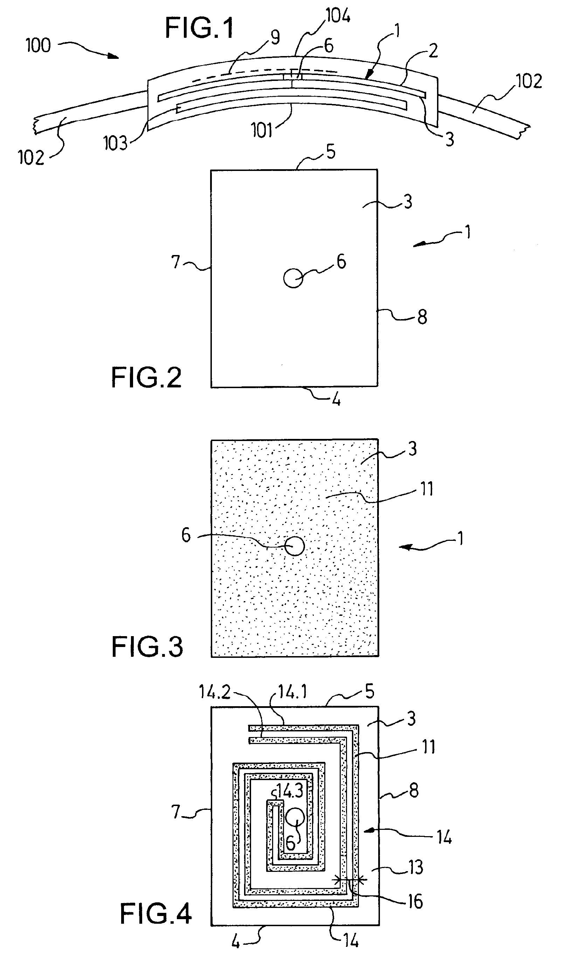

La figure 1 représente une montre 100 de luxe comportant un boîtier 101 de forme courbe auquel est accroché un bracelet 102. Ce boîtier 101 comporte un mécanisme 103 et des aiguilles 9 dont les extrémités sont reliées au mécanisme 103. Ce mécanisme 103 est apte à faire tourner les aiguilles 9 de cette montre en fonction du temps. Le boîtier 101 comporte également un verre 104 transparent pour protéger les aiguilles 9.

Un cadran 1 positionné entre les aiguilles 9 et le mécanisme 103 permet une lecture de l'heure par le porteur de la montre. A cet effet, le cadran 1 comporte une face avant 2 sur laquelle des nombres ou des repères indiquant les heures sont dessinés et une face arrière 3 parallèles entre elles. Les aiguilles 9 sont susceptibles de pointer vers les nombres ou repères de la face avant 2. Les faces 2 et 3 possèdent, en coupe, une forme d'arc de cercle de manière à suivre la forme courbe du boîtier 101. Lorsque le cadran 1 est assemblé avec les autres pièces de la montre 100, la face arrière 3 de ce cadran n'est pas visible de l'extérieur de cette montre.

Sur la vue de face représentée à la figure 2, on observe que le cadran 1 possède une forme rectangulaire et comporte quatre côtés 4, 5, 7 et 8 reliés entre eux. Les côtés 4 et 5 sont parallèles entre eux et opposés l'un de l'autre. Les côtés 7 et 8 qui relient les côtés 4 et 5 entre eux sont opposés l'un de l'autre et globalement parallèles entre eux. En supposant que l'épaisseur du cadran 1 est négligeable, ces côtés 4, 5, 7 et 8 délimitent en fait les faces avant et arrière de la montre 100.

Le cadran 1 comporte également un trou 6 à travers lequel les aiguilles 9 de la montre sont destinées à passer afin d'être reliées au mécanisme 103. Le trou 6 est réalisé globalement au milieu du cadran 1.

En variante, le cadran 1 possède une autre forme, par exemple une forme circulaire.

La figure 3 montre une étape dans laquelle on recouvre la face arrière 3 du cadran d'une couche 11 d'isolant représentée par des points. Dans une mise en oeuvre, cette couche 11 d'isolant est collée sur la face 3 et la recouvre dans sa totalité.

Une telle étape permet d'éviter que le champ émis ou reçu par l'antenne ne soit perturbé pas le cadran 1 lorsque ce dernier est métallique. Toutefois, une telle étape n'est pas essentielle à la mise en oeuvre du procédé selon l'invention.

La figure 4 montre une étape du procédé selon l'invention dans laquelle on plaque un masque 13 contre la couche isolante 11. Ce masque 13 possède une ouverture 14 traversant l'épaisseur du masque. Cette ouverture 14 comporte deux fentes en spirale 14.1 et 14.2 reliées entre elles par une fente droite 14.3.

Plus précisément, les deux fentes 14.1 et 14.2 décrivent chacune une spirale, tout en restant distantes l'une de l'autre d'un écart 16 globalement constant. Chaque fente 14.1 et 14.2 comporte des segments reliés entre eux qui s'étendent alternativement parallèlement à la face 7 et parallèlement à la face 5. Ces fentes 14.1-14.2 se répartissent ainsi autour du trou 6, des extrémités du masque 13 vers l'intérieur du masque 13, en se rapprochant de plus en plus du trou 6. Ces fentes 14.1 et 14.2 sont reliées entre elles à leur extrémité par une fente droite 14.3, dans une zone proche du trou 6.

La largeur des fentes 14.1 et 14.2, et l'écart 16 entre ces fentes est de l'ordre du millimètre.

En variante, lorsque le cadran 1 possède une forme ronde, les fentes 14.1, 14.2 du masque 13 possèdent une forme arrondie en escargot.

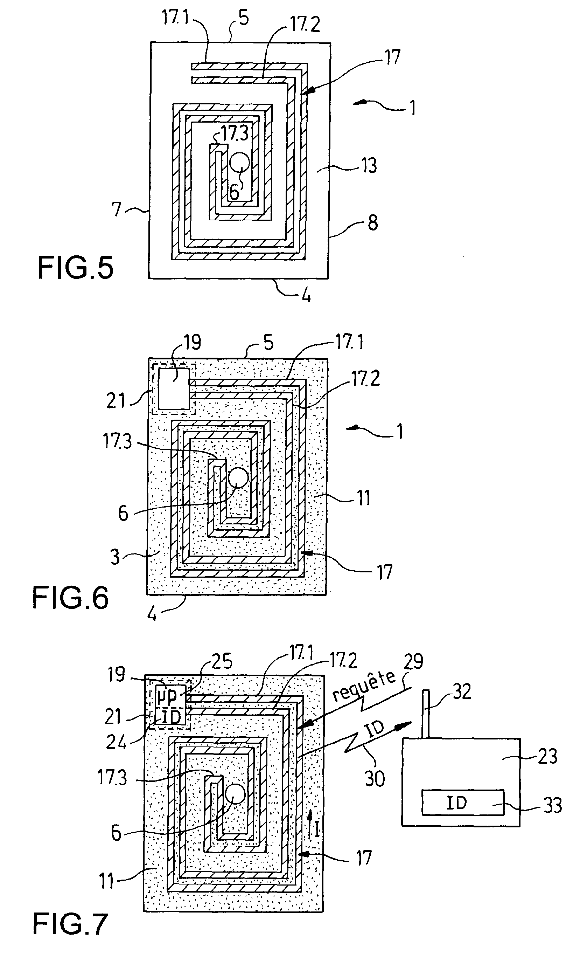

La figure 5 montre une étape du procédé selon l'invention dans laquelle on dépose, par projection plasma, un matériau conducteur représenté par des hachures sur les zones du cadran 1 non recouvertes par le masque 13.

A cet effet, on utilise un gaz à l'état plasma, par exemple de l'argon ou de l'hélium, comme conducteur par ionisation. Une poudre d'aluminium ou de cuivre est alors injectée dans ce gaz plasma avec un angle spécifique, et est projetée sur la surface du cadran 1 à revêtir qui est délimitée par le masque 13. On obtient alors une antenne 17 qui comportent des parties conductrices 17.1 et 17.2 en spirale qui sont reliées entre elles par une partie conductrice droite 17.3. Cette antenne 17 possède ainsi la même forme que celle l'ouverture 14 du masque 13. De préférence, la pulvérisation plasma est faite à froid, mais on pourrait aussi envisager une pulvérisation plasma à chaud.

La forme en spirale permet à l'antenne 17 de s'étendre sur la plus grande surface possible de la face 3. Une telle conformation de l'antenne optimise son émission de signal à destination du lecteur ainsi que sa réception du champ du lecteur. En outre, une telle conformation de l'antenne 17 lui permet de transformer le champ qu'elle reçoit en un courant qui circule dans un circuit formé par les parties conductrices 17.1-17.3 et le contrôleur.

De préférence, l'antenne 17 possède une épaisseur suffisamment importante pour que la lecture du circuit RFID par un lecteur puisse être faite à une distance d'au moins 30 centimètres.

La figure 6 montre une représentation schématique d'une étape du procédé selon l'invention dans laquelle on enlève le masque 13 après la pulvérisation plasma.

On accroche alors un contrôleur 19, par collage par exemple, à l'endroit d'un angle de la face 3 arrière du cadran. On relie ensuite, par soudage par exemple, le contrôleur 19 à l'antenne 17. Dans une mise en oeuvre de l'invention, le contrôleur 19 est recouvert d'une fine couche de résine pour sa protection.

La figure 7 montre une représentation schématique d'un échange de données entre une montre selon l'invention et un lecteur 23 de circuit RFID.

A cet effet, le contrôleur 19, qui est par exemple un microcontrôleur, comporte un microprocesseur 25 et une mémoire 24 à l'intérieur de laquelle est stocké un numéro d'identifiant ID de la montre permettant son authentification. Ce numéro d'identifiant ID est un numéro unique, par exemple le numéro de série, associé à la montre par le fabriquant au moment de la fabrication de cette montre.

Le contrôleur 19 est apte à être alimenté par le courant engendré par les signaux électromagnétiques émis par le lecteur 23, lorsque ce contrôleur 19 se trouve à proximité de ce lecteur 23. Le contrôleur 19 comporte des moyens pour recevoir et traiter un signal de requête 29 émis par le lecteur 23 et des moyens pour émettre un signal 30 comportant l'identifiant ID de la montre à destination de ce lecteur 23, en réponse au signal de requête 29.

Le lecteur 23 comporte des moyens pour émettre des signaux d'une puissance suffisante pour la mise sous tension du contrôleur 19. Le lecteur 23 est apte à émettre le signal 29 de requête en réponse duquel le circuit RFID émet le signal 30 comportant l'identifiant ID de la montre.

Ainsi, lorsque la montre est située à proximité du lecteur 23, le circuit RFID capte, à l'aide de son antenne 17, le signal 29 de requête d'identifiant. Ce signal 29 assure la mise sous tension du circuit RFID. En réponse à ce signal 29, le circuit RFID émet un signal 30 comportant l'identifiant ID de la montre à destination du lecteur 30. Ce signal 30, capté par une antenne 32 du lecteur, est traité par une unité de commande de ce lecteur. Après traitement de ce signal, le lecteur peut afficher l'identifiant ID de la montre sur un écran 33 et l'authenticité de la montre peut ainsi être vérifiée.

Bien entendu, les échanges entre le lecteur 23 et le circuit RFID 17, 19, ainsi que l'identifiant ID stocké dans la mémoire 24 peuvent être cryptés.

En variante, on dépose l'antenne 17 par pulvérisation plasma directement sur le métal du cadran 1 et après cette pulvérisation, on plaque la couche d'isolant 11 entre les parties conductrices de l'antenne 17.

En variante, le circuit RFID comporte sa propre pile et est autonome. Il n'a alors pas besoin d'être mis sous tension par les signaux du lecteur 23.

## Revendications

1. - Objet comportant une plaque (1) avec une face interne (3), cette face interne (3) n'étant pas visible de l'extérieur de l'objet lorsque la plaque (1) est assemblée avec les autres pièces de l'objet,
- cet objet comportant un circuit (17, 19) de type RFID capable, via une liaison radio, de recevoir un signal de requête (29) émis par un lecteur (23) de circuit RFID et d'émettre un identifiant (ID) authentifiant l'objet en réponse à ce signal de requête (29) à destination du lecteur (23),
- ce circuit RFID comportant un contrôleur (19) et une antenne (17) métallique reliée à ce contrôleur (19), le contrôleur (19) étant apte à traiter le signal de requête (29) émis par le lecteur (23) et à émettre via l'antenne (17) l'identifiant (ID) de l'objet à destination du lecteur (23),
- ce contrôleur (19) et cette antenne (17) étant fixés sur la face interne (3) de la plaque (1),
- l'antenne (17) étant réalisée par un dépôt en couche mince sur la face interne (3) de la plaque (1), cette antenne (17) étant obtenue par pulvérisation plasma d'un matériau conducteur, tel que le cuivre ou l'aluminium, sur la face interne de la plaque (1).

2. - Objet selon la revendication 1, dans lequel :
- l'antenne (17) comporte deux parties conductrices (17.1, 17.2) réalisées dans le même plan, ces deux parties conductrices (17.1, 17.2) s'étendant suivant une trajectoire en spirale et étant distantes l'une de l'autre d'un écart (16) sensiblement constant, ces deux parties conductrices étant reliées entre elles à leur extrémité par une partie conductrice (17.3).

3. - Objet selon la revendication 1 ou 2, comportant une couche isolante (11), cette couche isolante (11) étant positionnée entre l'antenne (17) et la face (3) interne de la plaque.

4. - Objet selon l'une des revendications 1 à 3, dans lequel :
- le contrôleur (19) du circuit RFID est recouvert d'une couche (21) de résine pour sa protection.

5. - Objet selon l'une des revendications 1 à 4, cet objet étant une montre (100) qui comporte un cadran (1), ce cadran (1) comportant une face avant (2) et une face arrière (3), la face avant (2) portant des numéros vers lesquels une aiguille (9) de cette montre est destinée à pointer, la face arrière (3) étant opposée à la face avant (2),
- le contrôleur (19) et l'antenne (17) étant fixés sur la face arrière (3) du cadran (1) de la montre.

6. - Montre selon la revendication 5, dans laquelle :
- l'antenne (17) comporte deux parties conductrices (17.1, 17.2), ces deux parties conductrices (17.1, 17.2) s'étendant en spirale autour d'un trou (6) réalisé dans le cadran (1) pour le passage d'aiguilles (9) de la montre, ces parties conductrices (17.1, 17.2) étant reliées entre elles à leur extrémité dans une zone proche de ce trou (6).

7. - Procédé pour fixer un circuit (17, 19) de type RFID sur un objet comportant une plaque (1) avec une face interne (3), cette face interne (3) n'étant pas visible de l'extérieur de l'objet lorsque la plaque (1) est assemblée avec les autres pièces de l'objet,
- le circuit (17, 19) de type RFID étant capable, via liaison radio, de recevoir un signal de requête (29) émis par un lecteur (23) de circuit RFID et d'émettre à destination de ce lecteur (23) un identifiant (ID) authentifiant l'objet en réponse à ce signal de requête (29),
- le circuit (17, 19) de type RFID comportant un contrôleur (19) et une antenne (17) reliée à ce contrôleur (19), le contrôleur (19) étant apte à traiter le signal de requête (29) émis par le lecteur (23) et à émettre via l'antenne l'identifiant (ID) de l'objet à destination du lecteur (23),
ce procédé comportant les étapes suivantes :
- réaliser l'antenne sur la face interne (3) de la plaque par un dépôt en couche mince, et
- fixer l'antenne (17) et le contrôleur (19) sur la face interne (3) de la plaque.

8. - Procédé selon la revendication 7, comportant l'étape suivante :
- coller une couche d'isolant (11) entre l'antenne (17) et la face interne (3) de la plaque (1).

9. - Procédé selon la revendication 7 ou 8, dans lequel, pour réaliser l'antenne, il comporte les étapes suivantes :
- plaquer un masque (13) comportant une ouverture (14) contre la face interne (3) de la plaque, et
- réaliser l'antenne (17) par pulvérisation plasma d'un matériau conducteur, tel que le cuivre ou l'aluminium, sur l'espace de la plaque non recouvert par le masque (13).

10. - Procédé selon la revendication 9, comportant l'étape suivante :
- utiliser un masque (13) comportant une ouverture (14) qui possède deux fentes en spirale (14.1, 14.2), ces deux fentes (14.1, 14.2) décrivant une trajectoire en spirale tout en restant distantes l'une de l'autre d'un écart (16) globalement constant, ces deux fentes (14.1, 14.2) étant reliées entre elles à leur extrémité par une fente (14.3) globalement de forme droite.

11. - Procédé selon l'une des revendications 7 à 10, comportant l'étape suivante :
- recouvrir le contrôleur (19) du circuit RFID d'une couche (21) de résine pour le protéger.

12. - Procédé selon l'une des revendications 7 à 11, dans lequel l'objet est une montre (100) comportant un cadran (1), ce cadran (1) comportant une face avant (2) et une face arrière (3), la face avant (2) portant des numéros vers lesquels une aiguille est destinée à pointer, la face arrière (3) étant opposée à la face avant (2),
- les étapes du procédé étant mises en oeuvre sur la face arrière (3) du cadran (1).

13. - Procédé selon la revendication 12, comportant l'étape suivante :
- utiliser un masque (13) comportant une ouverture (14.1-14.8) qui possède deux fentes en spirale (14.1, 14.2), ces deux fentes (14.1, 14.2) décrivant une trajectoire en spirale autour d'un trou (6) réalisé globalement au milieu du cadran (1) pour le passage d'aiguilles (9) de la montre, ces fentes (14.1, 14.2) étant reliées entre elles à leur extrémité.
